# EUROPÄISCHE PATENTSCHRIFT

(11) **EP 1 740 394 B1**
(45) Veröffentlichungstag und Bekanntmachung des Hinweises auf die Patenterteilung: **07.09.2011**
(21) Anmeldenummer: 05740068.1
(22) Anmeldetag: 21.04.2005
(51) Int. Cl.: B42D 15/10, B41M 3/10, G07F 7/00

(54) **SICHERHEITSELEMENT, WERTDOKUMENT UND VERFAHREN ZUR HERSTELLUNG EINES SICHERHEITSELEMENTS**
SECURITY ELEMENT, VALUABLE DOCUMENT AND METHOD FOR THE PRODUCTION OF A SECURITY ELEMENT
ELEMENT DE SECURITE, DOCUMENT DE VALEUR ET PROCEDE POUR PRODUIRE LEDIT ELEMENT DE SECURITE

(30) Priorität: 27.04.2004 DE 102004020347; 02.11.2004 DE 102004053367
(43) Veröffentlichungstag der Anmeldung: 10.01.2007
(73) Patentinhaber: Bundesdruckerei GmbH, 10969 Berlin (DE)
(72) Erfinder: MUTH, Oliver, 12277 Berlin (DE); DEICHSEL, Andreas, 10627 Berlin (DE); EHREKE, Jens, 10317 Berlin (DE); PAESCHKE, Manfred, 16352 Basdorf (DE); SEIDEL, Rainer, 13467 Berlin (DE)
(74) Vertreter: KEIL & SCHAAFHAUSEN Patentanwälte
(86) Internationale Anmeldenummer: PCT/EP2005/051771
(87) Internationale Veröffentlichungsnummer: WO 2005/105478

(56) Entgegenhaltungen:
- EP-A- 1 168 111
- DE-A1- 10 223 156
- DE-A1- 19 810 134
- ES-A1- 2 141 652
- US-A- 4 842 968
- US-A1- 2002 191 234
- PATENT ABSTRACTS OF JAPAN Bd. 017, Nr. 033 (P-1473), 21. Januar 1993 (1993-01-21) & JP 04 253085 A (NIPPON SHEET GLASS CO LTD; others: 01), 8. September 1992 (1992-09-08)

## Beschreibung

Die Erfindung betrifft ein Wertdokument mit einem Träger und einem Sicherheitselement, wobei das Sicherheitselement ein Volumenhologramm umfasst, das durch Belichtung eines belichtbaren Volumenbereichs des Trägers erzeugt ist. Die Erfindung betrifft ein Verfahren zur Herstellung eines entsprechenden Sicherheitselements.

Als Wertdokument werden in der vorliegenden Anmeldung Wert- und Sicherheitsdokumente wie beispielsweise Banknoten, Ausweise, Reisepässe, Scheckformulare, Eintrittskarten, Tickets, Bons, welche auch in Kartenform ausgeführt sein können, bezeichnet. Ein Sicherheitselement für derartige Wertdokumente erlaubt es, festzustellen, ob der Datenträger echt oder gefälscht ist.

Als Sicherheitselemente werden heute häufig volumenholographische Techniken verwendet, bei denen z.B. in einem Fotopolymerfilm Informationen im Volumen holographisch gespeichert werden. Außerdem kommt häufig die Prägehologrammtechnik zum Einsatz. Hier wird von einem Masterhologramm ein Prägestempel erzeugt, mit welchem in ein Substrat unter Wärmeeintrag eine Oberflächenstruktur eingeprägt wird. Diese Struktur erzeugt bei Beleuchtung holographische Effekte.

In der Druckschrift DE 102 23 156 A1 wird ein Sicherheitselement beschrieben, das eine Oberflächenhologrammstruktur und eine damit verbundene Volumenhologrammstruktur aufweist, die sich zumindest teilweise überlappen. In dem Volumenhologramm ist volumenholographisch zumindest in Teilbereichen die Information des Oberflächenhologramms gespeichert. Hierbei ist das Volumenhologramm in einer Fotopolymerschicht, die auf einer metallisierten Oberflächenhologrammstruktur angeordnet ist, enthalten. Bei der Belichtung der durch Beschichtung hergestellten Fotopolymerschicht wird das Licht durch die reflektierende Schicht des Oberflächenhologramms reflektiert, und es entsteht somit ein volumenholographisches Abbild der Prägehologrammstruktur. Ein derartiges Sicherheitsmerkmal ist aufwändig in der Herstellung.

Die Druckschrift DE 198 10 134A1 beschreibt ebenfalls ein Sicherheitselement für ein Wertdokument, das ebenfalls ein Volumenhologramm in einer Fotopolymerschicht umfasst. In das Volumenhologramm ist ein kinetischer Effekt eingebracht, der das Nachahmen dieser Hologramme erschwert. Der kinetische Effekt zeichnet sich dadurch aus, dass das durch die Beugungsstruktur erzeugte Muster sich bei einer gegebenen Beleuchtungs- und Beobachtungsrichtung bezüglich eines mit dem Substrat fest verbundenen Koordinatensystems mit vorbestimmter Geschwindigkeit entlang einer vorbestimmten Bahn bewegt, wenn das Substrat bewegt, beispielsweise mit einem bestimmten Drehsinn und einer bestimmten Geschwindigkeit gedreht, wird. Es wird weiterhin offenbart, dass das Volumenhologramm nach der Aufnahme geschrumpft und/oder geschwollen wird, so dass sich die Abstände der Bragg'schen Netzebenen in diesen Bereichen entsprechend verändern. Durch diese Maßnahmen kann die Fälschungssicherheit und die Erkennbarkeit der Sicherheitsmerkmale verbessert werden. Sie sind jedoch nicht geeignet, weitere Informationen darzustellen. Analog zur Druckschrift DE 102 23 156 A1 kann dieses Sicherheitsmerkmalleicht dadurch gefälscht werden, dass die Schicht mit dem Volumenhologramm abgetrennt und auf ein neues Dokument übertragen wird.

Die Druckschrift JP 04253085 A offenbart einen fotoempfindlichen Körper für eine Hologrammaufzeichnung, der eine fotoempfindliche Schicht aufweist. Die Oberfläche eines transparenten Kunststofffilms wird in Kontakt mit einer fotopolymerisierbaren Verbindung gebracht, die ein Monomer (oder ein Oligomer) mit einer Kohlenstoff-Kohlenstoff-Doppelbindung enthält. Die Oberflächenschicht des Kunststofffilms wird durch die polymerisierbare Verbindung imprägniert, um die fotoempfindliche Schicht auszubilden, so dass ein Körper für die Hologrammaufzeichnung geschaffen wird. Hierbei dient nicht der Bereich der fotoempfindlichen Schicht, der in das Substrat eindringt, als Aufzeichnungsmedium, sondern lediglich die darüber liegende Schicht. Das (teilweise) Eindringen in das Substrat dient lediglich dazu, die mechanische Verbindung zwischen der fotosensitiven Schicht und dem Substrat zu verbessern.

Als Informationen werden im Folgenden Bilder oder Muster oder Buchstaben oder Text oder Ziffern oder Zahlen oder Kombinationen aus diesen Elementen angesehen. Informationen in Sicherheitselementen werden vom Benutzer oder von einer Prüfvorrichtung gelesen. Der Benutzer oder die Vorrichtung bestimmt anhand des Informationsinhaltes des Sicherheitselements, ob der Datenträger echt oder gefälscht ist.

Als Sicherheitselemente sind ferner Wasserzeichen bekannt, welche für Wertdokumente aus Papier weit verbreitet sind. Als Wasserzeichen wird ein Volumenbereich eines Wertdokuments bezeichnet, der dem Betrachter beim Hindurchsehen durch das Wertdokument gegen das Licht oder gegen eine zur Farbe des Wertdokuments kontrastreiche Fläche eine Information offenbart. Die Information ist nicht so deutlich sichtbar, wenn das Wertdokument gegen eine weniger kontrastreiche Fläche oder entgegengesetzt zum Licht betrachtet wird. Konventionell werden Wasserzeichen durch Erhebungen in einem Sieb durch Prägung noch im nassen Papierbrei erzeugt, so dass das Papier an dieser Stelle dünner und damit transparenter wird. Der Fertigungsaufwand für derartiges Papier ist sehr hoch. Dem gegenüber werden einem Träger aus Papier oder Kunststoff oder Baumwolle oder einem Gemisch aus diesen Substanzen bei sogenannten chemischen oder künstlichen Wasserzeichen chemische Substanzen während der Papierherstellung oder nach Abschluss des Herstellungsverfahrens zugegeben, um die Transparenz des Trägers an diesen Stellen zu verändern. Vielen Verfahren liegt zunächst die Imprägnierung des Papiers mit reaktiven Substanzen zugrunde, welche durch eine entsprechende Nachbehandlung zu einer erhöhten Transparenz oder auch zu einer erhöhten Opazität (englisch: opaque-shadow-watermark) führt.

Der Erfindung liegt die Aufgabe zugrunde, ein Sicherheitselement mit einem Volumenhologramm und besonders hoher Fälschungssicherheit, beispielsweise gegenüber dem Kopieren, anzugeben. Das Sicherheitselement soll außerdem ohne großen Aufwand hergestellt werden können, wobei die Herstellung nicht in Verbindung mit der Herstellung des Trägers erfolgen soll, sondern dieser nachgeschaltet sein soll. Die Aufgabe bestand weiterhin darin, ein Sicherheitselement zu schaffen, welches mit dem Träger eine Einheit bildet und nicht nur, z.B. mittels Beschichten oder Aufkleben, mit diesem lediglich verbunden sein soll. Das Sicherheitselement sollte ferner für der Aufnahme besonders vieler Informationen zugänglich sein. Der Erfindung liegt ferner die Aufgabe zugrunde, ein entsprechendes Wertdokument zu schaffen, sowie ein einfaches und kostengünstiges Verfahren zur Herstellung derartiger Sicherheitselements anzugeben.

Die Aufgabe hinsichtlich des Sicherheitselements wird erfindungsgemäß dadurch gelöst, dass dieses eine auf den Träger aufgebrachte Substanz aufweist, welche mindestens teilweise in den Träger eingedrungen ist, und durch den mit der Substanz durchdrungenen Volumenbereich der belichtbare Volumenbereich des Trägers ausgebildet wird und dass der Träger Zellulose und/oder Baumwolle enthält und vorzugsweise als Papierträger ausgebildet ist. Die Aufgabe hinsichtlich des Wertdokuments wird durch ein mit einem derartigen Sicherheitselement versehenes Wertdokument gelöst. Ebenfalls wird die Aufgabe hinsichtlich des Verfahrens durch ein Verfahren gelöst, bei dem vor der Belichtung eine Substanz auf den Träger aufgebracht wird, welche mindestens teilweise in dem Träger eindringt, wobei durch die Substanz und durch den mit der Substanz durchdrungenen Volumenbereich der belichtbare Volumenbereich ausgebildet wird.

Das erfindungsgemäße Sicherheitselement hat den Vorteil, dass es ohne großen Aufwand herstellbar ist und der Herstellung des Trägers nachgeschaltet ist. Es ist somit unabhängig vom Träger variabel an die Gestaltung des jeweiligen Wertdokuments anpassbar. Ferner bildet das Sicherheitselement mit dem Träger eine Einheit und kann nicht von diesem getrennt werden. Das erfindungsgemäße Sicherheitselement ist geeignet, eine Vielzahl von Informationen unterschiedlicher Art zu speichern. Ein weiterer Vorteil besteht darin, dass das Volumenhologramm nicht als Halbzeug im Wertdokument vorliegt, sondern vor Ort (in situ) und am Stück (en bloc) erzeugt wird. Entsprechende Vorteile können auch für das erfindungsgemäße Wertdokument angegeben werden. Das erfindungsgemäße Verfahren zur Herstellung des Sicherheitselements weist den Vorteil auf, dass es einfach und kostengünstig realisierbar ist.

Bevorzugte Ausführungsbeispiele der Erfindung sind in den abhängigen Ansprüchen darstellt.

Als besonders vorteilhaft wird angesehen, dass der Träger vorzugsweise als Papierträger ausgebildet ist. Besonders vorteilhaft ist weiterhin, wenn die Substanz auf den Träger aufgedruckt ist. Hierdurch ist eine genaue Steuerung der Gestalt des belichtbaren Volumenbereichs in Bezug auf die Menge der aufgetragenen Substanz und die Verteilung der aufgetragenen Substanz auf der Oberfläche des Trägers möglich.

Es ist ferner von Vorteil, wenn der belichtbare Volumenbereich zumindest für einen bestimmten Wellenlängenbereich der elektromagnetischen Strahlung zumindest teilweise transparent ausgebildet ist. Durch Bereiche unterschiedlicher Transparenz können weitere Informationen im Sicherheitselement gespeichert werden, welche die Wirkungsweise eines chemischen Wasserzeichens aufweisen.

Weitere Informationen können in dem belichtbaren Volumenbereich dadurch gespeichert werden, dass dieser auf der Oberfläche ein Relief aufweist, welches vorzugsweise geprägt ist.

In einem besonders bevorzugten Ausführungsbeispiel ist das Relief als diffraktives Element oder als Hologramm gestaltet.

Besonders geeignete Substanzen, die auf den Träger aufgebracht werden, sind Substanzen, welche zum einen in den Träger eindringen und in diesem fixierbar sind und zum anderen eine ebenfalls fixierbare, lichtempfindliche Substanz aufweisen. Vorzugsweise verändern diese Substanzen die Transparenz des Trägers mindestens in einem vorgegebenen Wellenlängenbereich der elektromagnetischen Strahlung. Derartige Substanzen bestehen aus einer Harz-/Binder-Grundkomponente, einer Komponente aus flüssigen und festen, ethylenisch (mehrfach-) ungesättigten Monomeren, einem Lösungsmittel, Katalysatoren/Initiatoren und gegebenenfalls weiteren Additiven.

Bei einem besonders vorteilhaften erfindungsgemäßen Verfahren zur Herstellung eines Sicherheitselements wird die Substanz durch einen Druckprozess auf den Träger aufgebracht. Derartige Druckprozesse sind Offset-, Letterset-, Sieb-, Flexo- oder Tiefdruck oder, besonders vorteilhaft, ein Ink-Jet-Verfahren (Tintenstrahldruckverfahren). Wie bereits oben angegeben sind derartige Druckprozesse besonders gut steuerbar. Von Vorteil für die Haltbarkeit der in das Sicherheitselement einbelichteten Informationen ist, wenn der belichtete Volumenbereich nach der Belichtung mittels elektromagnetischer Strahlung und/oder mittels Wärmezufuhr vernetzt wird.

Von Vorteil ist weiterhin, vor dem Belichten und nach dem Aufbringen der Substanz auf den Träger ein Relief in die Oberfläche des belichtbaren Volumenbereichs einzuprägen. Es wird dadurch eine besonders hohe Fälschungssicherheit erreicht, da die elektromagnetische Strahlung, welche die Bragg'schen Netzebenen im belichtbaren Volumenbereich erzeugt, durch die Relief-Struktur auf der Oberfläche beeinflusst wird. Hierbei erfolgt das Einprägen des Reliefs besonders vorteilhaft unter Zufuhr von Wärme. Alternativ kann das Relief nach dem Prägeschritt in vorteilhafter Weise mittels elektromagnetischer Strahlung und/oder mittels Wärmezufuhr fixiert werden.

Das Einfügen eines Schrittes, der eine IR-Trocknung beinhaltet, ist vor dem Prägevorgang bzw. vor dem Belichtungsvorgang besonders vorteilhaft, da die Substanz in dem belichtbaren Volumenbereich hierdurch fixiert wird, indem die Mobilität der Teilchen der Substanz eingeschränkt wird. Die Ausdehnung des belichtbaren Volumenbereichs kann hierdurch gezielt beeinflusst werden.

Die Erfindung wird nachfolgend anhand von Ausführungsbeispielen näher erläutert, die anhand von Zeichnungen dargestellt sind. Es zeigen
- Figur 1: ein erstes Ausführungsbeispiel eines erfindungsgemäßen Wertdokuments mit einem erfindungsgemäßen Sicherheitselement in einer Ansicht von oben, schematisch,
- Figuren 2 bis 4: ein weiteres Ausführungsbeispiel eines erfindungsgemäßen Wertdokuments mit einem erfindungsgemäßen Sicherheitselement in mehreren Ansichten von oben, schematisch,
- Figuren 5 und 6: die anhand der Figuren 1 und 2 bis 4 gezeigten Ausführungsbei- spiele des erfindungsgemäßen Wertdokuments mit erfindungsge- mäßem Sicherheitselement im Querschnitt, schematisch, und
- Figur 7: eine schematische Darstellung eines erfindungsgemäßen Verfah- rens zur Herstellung eines Wertdokuments.

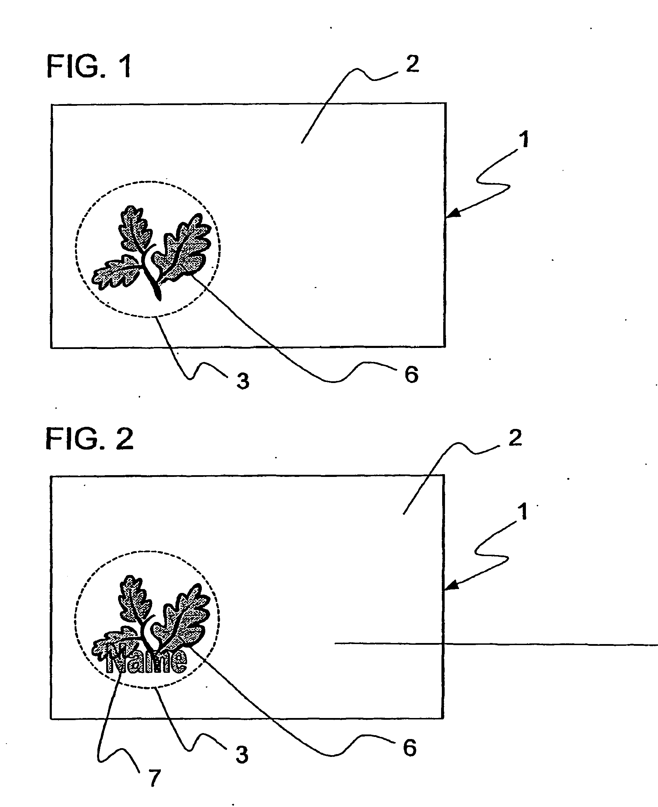

Figur 1 zeigt ein erfindungsgemäßes Wertdokument 1, das einen Träger 2 aufweist. Der Träger 2 enthält Cellulose und/oder Baumwolle. Vorzugsweise ist der Träger 2 ein Papierträger. In einem Ausführungsbeispiel könnte Kunststoff einen weiteren Bestandteil des Trägers darstellen.

Das Sicherheitselement 3 ist auf dem Träger 2 angeordnet und wird in der Darstellung der Figur 1 mittels einer kreisrunden, gestrichelten Linie gekennzeichnet. Innerhalb des durch die gestrichelte Linie gekennzeichneten Bereichs des Sicherheitselements 3 ist ein belichtbarer Volumenbereich angeordnet, in dem das Volumenhologramm 6 durch Belichten erzeugt wurde. Die mit einer gestrichelten Linie gekennzeichnete Umrandung des Sicherheitselements ist für den Betrachter in der Regel nicht erkennbar und dient in den anhand der Figuren 1 bis 4 erläuterten Ausführungsbeispielen lediglich zu besseren Veranschaulichung.

Das Sicherheitselement 3 weist ein Volumenhologramm 6 auf, das dem Betrachter in dem in Figur 1 dargestellten Ausführungsbeispiel als Bild bestehend aus einem Ast mit drei Blättern erscheint. Es wird durch Bragg'sche Netzebenen erzeugt, welche in einen belichtbaren Volumenbereich innerhalb des Sicherheitselements 3 des Trägers 2 durch Belichten erzeugt wurden. Es können beliebige andere Informationen durch das Volumenhologramm 6 dargestellt werden.

Zur Erzeugung des belichtbaren Volumenbereichs des Trägers 2 wurde auf den Träger 2 vor der Belichtung eine Substanz aufgetragen. Als eine derartige Substanz, welche mindestens teilweise in den Träger 2 eindringt und außerdem ein lichtempfindliches, fixierbares und vorzugsweise die Transparenz des Trägers änderndes Material enthält, ist folgendermaßen zusammengesetzt:
- 10 bis 75 Gew.% Harz-/Binder-Grundkomponente,
- 5 bis 60 Gew.% flüssige und feste, ethylenisch (mehrfach-) ungesättigte Monomere,
- 0 bis 70 Gew.% Lösungsmittel,
- 0,1 bis 15 Gew.% Katalysatoren/Initiatoren und gegebenenfalls
- 0,1 bis 15 Gew.% Additive.

Die Harz-/Binder-Grundkomponente verursacht das Eindringen der Substanz in den Träger und dient gegebenenfalls zur Erzeugung der Transparenz. Geeignet als Harz-/Binder-Grundkomponente wäre ein Melamin-Tränkharz wie Kauramin®-752, -753, -786 oder -787 der Fa. BASF sowie die Polymerdispersion Kauropal®-937, -938. Ferner können Firnisse auf der Basis von Nitrocellulose oder Leinöl verwendet werden. Weitere Harz-/Binder-Grundkomponenten sind den Druckschriften DE 101 53 028 A1 und EP 0 324 480 B1 zu entnehmen. Die dort aufgeführten Verbindungen, insbesondere in den Abschnitten [0038] bis [0043] der DE 101 53 028 A1 und in den Beispielen 1 bis 51 der EP 0 324 480 B1, werden durch Bezugnahme in die Beschreibung aufgenommen. Die letztgenannte Druckschrift verwendet ein Cellulose Ester in der Form von Cellulose Acetat Butyrat oder Polystyrol, Polystyrol-Co-Methylmethacrylat, Polystyrol-Co-Acrynitril, PMMA pur sowie Copolymere von PMMA mit Methacrylsäure und Ethylacrylat oder Acrylsäure.

Die flüssigen und festen, ethylenisch (mehrfach-) ungesättigten Monomere dienen zusammen mit der Harz-/Binder Grundkomponente und den Initiatioren zur Erstellung des Volumenhologramms, da diese Komponente für die Erzeugung der Bragg'schen Netzebenen verantwortlich ist, und zusammen mit der Harz-/Binder-Grundkomponente gegebenenfalls zur Erzeugung der Transparenz. Beispielsweise können reaktive Monomere, Oligomere, Präpolymere, insbesondere mono-, di- und trifunktionale Acrylate verwendet werden. Beispiele hierfür sind Laromer® der Fa. BASF oder SR-9003 oder SR-415 der Fa. Sartomer. Weitere Beispiele sind der Druckschrift DE 101 53 028 A1, insbesondere in Anspruch 6 und der EP 0 324 480 B1, insbesondere in den Beispielen 1 bis 51 zu entnehmen. Weitere derartige belichtbare Materialien sind in "Ullmann's Encyclopedia of Industrial Chemistry", Kapitel "Materials Used in Holography", Online-Veröffentlichung am 15. Juni 2000, angegeben. Alle anhand von Zitaten aus Druckschriften angegebenen Beispiele werden ebenfalls durch Bezugnahme in die Beschreibung aufgenommen.

Die Lösungsmittel dienen zur Homogenisierung und Viskositätseinstellung. Insbesondere können als Lösungsmittel Alkohole (Methanol, Ethanol, IsoPropanol), Ketone (Aceton, 2-Butanon), Ester (Ethylacetat) oder andere in der organischen Chemie übliche Lösungsmittel angewendet werden. Ferner könnten auch halogenierte Lösungsmittel (Dichlormethan) oder Aromate (Toluol, Xylol) eingesetzt werden.

Die Katalysatoren/Initiatoren dienen zur Inhibierung der Vernetzung. Hierfür könnten insbesondere Irgacure®2020, Irgacure®819, Darocure®1173 der Fa. Ciba oder andere Photoinitiatoren verwendet werden. Für Kauramin-Tränkharze sind die Härter 527, 529 für Kauramin®- oder Kaurit®-Tränkharze der Fa. BASF geeignet. Weitere Beispiele sind in den Druckschriften DE 101 53 028 A1, dort insbesondere in Absatz [0051], und EP 0 324 480 B1, dort insbesondere auf Seite 9, Zeile 38 bis Seite 10, Zeile 33, angegeben. Durch Bezugnahme auf die Druckschriften werden diese Beispiele in die Beschreibung aufgenommen.

Die Additive dienen zur Erhöhung der Fließfähigkeit und der Benetzung und zur Trocknung usw. Als Additive könnten beispielsweise die Antischaummittel Byk-020, -052 der Fa. Byk und/oder die Surfactants Baysilone von Bayer und Byk-306, -310 der Fa. Byk und/oder das Konservierungsmittel Borchers S1 der Fa. Borchers verwendet werden. Weitere Additive können beispielsweise "Ullmann's Encyclopedia of Industrial Chemistry", Kapitel "Paints and Coatings", Online-Veröffentlichung am 15. Juni 2000, entnommen werden. Diese Beispiele werden hierdurch ebenfalls in die Beschreibung integriert.

Zum Auftragen der Substanz eignen sich alle Druckverfahren wie beispielsweise Offset-, Letterset-, Sieb-, Flexo- oder Tiefdruck oder das Ink-Jet-Verfahren. Mittels des Ink-Jet-Verfahrens können die eingebrachten Motive bei jedem Druckprozess vorteilhaft verändert werden, während die übrigen Druckprozesse auf das in der entsprechenden Druckform enthaltene Motiv beschränkt sind. Jedoch können durch diese Verfahren größere Mengen der Substanz übertragen werden.

Das Volumenhologramm wurde nach dem Auftrag der Substanz und deren Eindringen in den Träger 2 mittels eines Lasers einer vorbestimmten Wellenlänge in den belichtbaren Volumenbereich des Sicherheitselements 3 durch Belichten erzeugt. Entsprechend erscheint das Volumenhologramm dem Betrachter in der vorgegebenen Farbe.

Das in Figur 1 dargestellte Wertdokument 1 kann weitere, nicht dargestellte Sicherheitselemente aufweisen, beispielsweise Bedruckungen, konventionelle

Wasserzeichen, aufgeklebte oder aufkaschierte Hologramme, Fotos oder in einer laserbaren Schicht des Wertdokuments eingelaserte Informationen oder dergleichen.

In den Figuren 2 bis 4 ist ein weiteres Ausführungsbeispiel für ein erfindungsgemäßes Wertdokument 1 dargestellt. Figur 2 zeigt hierbei das Wertdokument 1 bei der Betrachtung unter einem ersten Winkel. Das Wertdokument 1 weist im Bereich des Sicherheitselements 3 auf dem Träger 2 neben dem Volumenhologramm 6 ein erstes Prägehologramm 7 auf. Hierzu wurde die Oberfläche des belichtbaren Volumenhologramms während des Herstellungsverfahrens mit einem ersten geprägten Oberflächenrelief versehen. Durch das erste Prägehologramm 7 können beispielsweise der Name des Inhabers des Wertdokuments oder andere Informationen dargestellt werden.

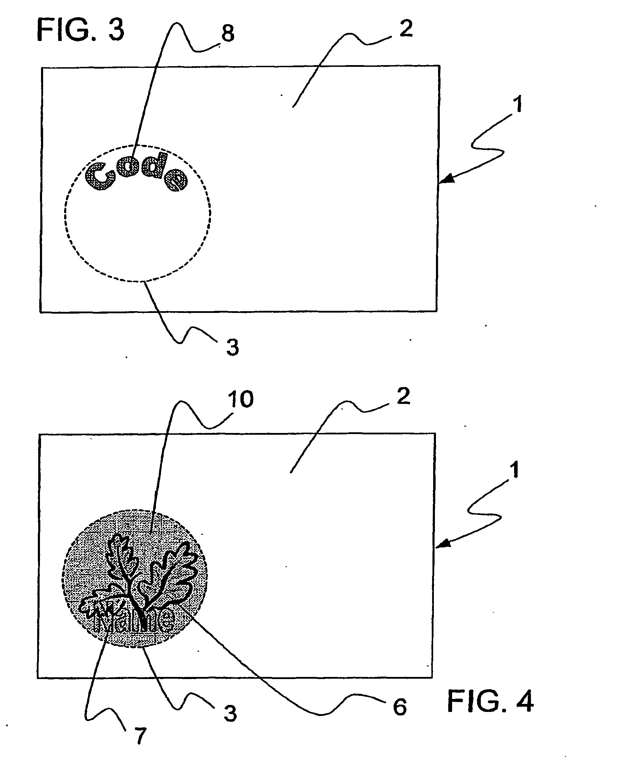

Figur 3 zeigt eine weitere Ansicht des Wertdokuments 1 unter einem zweiten Betrachtungswinkel. Im Bereich des Sicherheitselements 3 erkennt der Betrachter nun ein zweites Prägehologramm 8, welches beispielsweise einem dem Inhaber des Wertdokuments 1 zugeordneten Code veranschaulicht. Es können durch das zweite Prägehologramm beliebige andere Informationen dargestellt werden. Das Volumenhologramm 6 und das erste Prägehologramm 7 sind unter dem zweiten Betrachtungswinkel nicht sichtbar. Das zweite Prägehologramm 8 wurde analog zum ersten Prägehologramm in die Oberfläche des belichtbaren Volumenbereichs durch Abformung eines weiteren Masters eingeprägt. Das Einprägen erfolgte hierbei in einem vom ersten Prägehologramm 7 verschiedenen Bereich des Sicherheitselements 3.

Neben Hologrammstrukturen können ebenso Mikroprägungen, diffraktive Strukturen, Mikro-Zylinderlinsen, Fresnel-Linsen oder andere optische Mikrostrukturen in die Oberfläche des belichtbaren Volumenbereichs eingeprägt werden.

In Figur 4 ist das erfindungsgemäße Wertdokument, das bereits in den Figuren 2 und 3 dargestellt wurde, in einer Ansicht dargestellt, wie es dem Betrachter erscheinen würde, wenn er es unter dem ersten Betrachtungswinkel und gleichzeitig gegen das Licht besehen würde. Es ist erkennbar, dass neben dem Volumenhologramm 6 und dem Prägehologramm 7 ein Wasserzeichen 10 sichtbar ist, welches in Figur 4 durch einen grau markierten, runden Bereich veranschaulicht ist. Dieses chemische Wasserzeichen 10 wird erzeugt durch den belichtbaren Volumenbereich, welcher durch die aufgebrachte Substanz in der Transparenz gegenüber den anderen Bereichen des Trägers 2 verändert ist. Mittels des Wasserzeichens können nicht nur Bilder in Form von Kreisen, sondern auch andere Informationen dargestellt werden. Durch die Variation der Menge der aufgebrachten Substanz können in einem besonders bevorzugten Ausführungsbeispiel unterschiedlich transparente Bereiche, quasi Halbtöne erzeugt werden. Halbtöne lassen sich auch durch die Verwendung eines vierstufigen Punkt-Rasters darstellen, sofern durch Diffusionsprozesse im Träger die Grenzen der Rasterpunkte nicht zu sehr "aufgeweicht" werden.

In einem weiteren Ausführungsbeispiel kann das Sicherheitselement ein chemisches Wasserzeichen enthalten, das eine gegenüber den übrigen Bereichen des Trägers veränderte Transparenz bezogen auf den nicht sichtbaren Wellenlängenbereich der elektromagnetischen Strahlung aufweist, beispielsweise im infraroten Bereich.

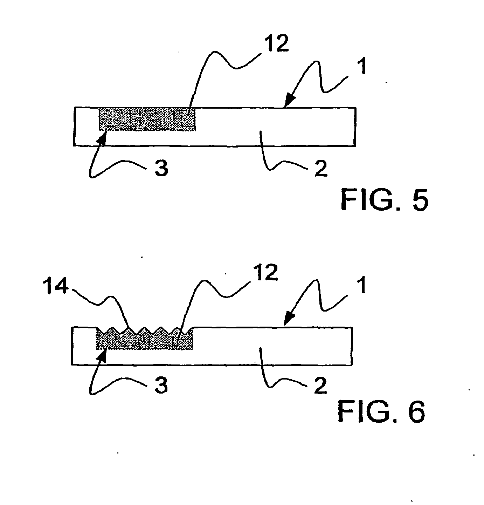

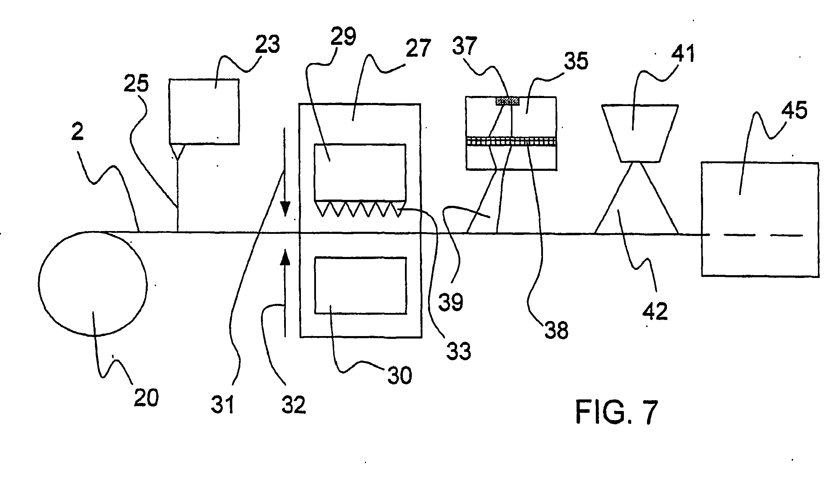

Figur 5 zeigt das erfindungsgemäße Wertdokument 1, welches bereits in Figur 1 dargestellt wurde, im Querschnitt. Grau schraffiert ist der belichtbare Volumenbereich 12 veranschaulicht, welcher die Bragg'schen Netzebenen des Volumenhologramms enthält. Der in Figur 5 dargestellte Volumenbereich 12, der durch das Eindringen der Substanz in den Träger 2 und Belichten dieses Bereichs als Volumenhologramm entstanden ist, umfasst nicht die gesamte Dicke des Trägers 2. Die Substanz hat den Träger nicht vollständig durchdrungen. In einem weiteren Ausführungsbeispiel kann die Substanz auch den Träger vollständig durchdringen. Entsprechend können auch die Bragg'schen Netzebenen über die gesamte Dicke des Trägers erzeugt werden. Dies ist insbesondere vorteilhaft, wenn zur Erzeugung des Volumenhologramms das anhand von Figur 7 beschriebene Kontaktmasterverfahren verwendet wird, welches eine höhere Transparenz des Trägers benötigt.

In Figur 6 ist ein Querschnitt des erfindungsgemäßen Wertdokuments 1 abgebildet, welches anhand der Figuren 2 bis 4 in der Ansicht von oben dargestellt wurde. Hier weist der belichtbare Volumenbereich 12 des Trägers 2 ein Oberflächenrelief 14 auf, welches das erste Prägehologramm 7 bildet. Das in einem anderen Bereich des erfindungsgemäßen Sicherheitselements 3 angeordnete zweite Prägehologramm 8 weist ein ähnliches Oberflächenrelief auf.

Anhand von Figur 7 wird ein erfindungsgemäßes Verfahren zur Herstellung eines Sicherheitselements für ein Wertdokument dargestellt. Das im Folgenden angegebene Verfahren ist ein kontinuierliches Verfahren. Das Verfahren könnte analog auch auf ein diskontinuierliches Bogenverfahren angewendet werden.

Das Verfahren beginnt, in dem von einer Rolle 20 der Träger 2 abgewickelt wird und mittels einer Druckeinrichtung 23, vorzugsweise einem Ink-Jet-Drucker (Tintenstrahldrucker), mit einer Substanz 25 bedruckt wird. Andere Druckeinrichtungen und die für den Druck geeigneten Substanzen wurden bereits weiter oben angegeben. Anschließend wird dem Träger 2 etwas Zeit gegeben, so dass die aufgebrachte Substanz in den Träger 2 eindringen kann. Hierfür werden sogenannte Papierspeicher verwendet.

Anschließend gelangen die bedruckten Bereiche des Trägers 2 zu einer Prägeeinrichtung 27, in welcher ein Stempel 29 oberhalb des Trägers 2 und eine Matrize 30 unterhalb des Trägers 2 angeordnet sind. Stempel 29 und Matrize 30 werden nach der Anordnung der bedruckten Bereiche in der Prägeeinrichtung 27 in Richtung Träger 2 bewegt. Die Bewegungsrichtungen sind hierbei durch die Pfeile 31 und 32 gekennzeichnet. Die Oberfläche des Stempels 29 weist ein Relief 33 auf, das sich in die Oberfläche des mit der Substanz versehenen Bereichs des Trägers 2 abformt. Hierbei ist auf der Oberfläche des mit der Substanz versehenen Bereichs ein zum Relief 33 negatives Relief entstanden, welches beispielsweise ein Prägehologramm oder eine andere oben angegebene Oberflächenstruktur beinhaltet. Anschließend werden Matrize 30 und Stempel 29 vom Träger 2 entfernt, wobei die Bewegungsrichtung von Stempel 29 und Matrize 30 entgegengesetzt der durch die Pfeile 31, 32 gekennzeichneten Richtungen ist. In anderen Ausführungsbeispielen des erfindungsgemäßen Verfahrens kann entweder nur der Stempel 29 oder nur die Matrize 30 bewegt werden.

Zur Fixierung der aufgebrachten Substanz und des Oberflächenreliefs kann der Stempel 29 und/oder die Matrize 30 beheizbar ausgeführt sein. Ebenso ist eine Trocknung durch UV-Bestrahlung möglich.

Alternativ zur Prägeeinrichtung 27 kann der Träger 2 nach der Bedruckung auch an einer nicht dargestellten Kalandriereinrichtung vorbeigeführt werden. Mittels einer beheizten, teflonisierten Kalanderwalze wird der Träger 2 so weit getrocknet, dass beispielsweise ein Reißen der Papierbahn und eine weitere Wanderung der Substanzteilchen im Träger 2 unterbunden wird. Durch die Kalandrierung wird kein Oberflächenrelief in dem Sicherheitselement erzeugt.

In einem weiteren Ausführungsbeispiel kann dem Kalandrier- oder dem Prägeschritt eine IR-Trocknung vorgeschaltet sein.

In dem anhand von Figur 7 dargestellten Ausführungsbeispiel folgt auf die Prägeeinrichtung 27 die Belichtungseinrichtung 35. Die Belichtungseinrichtung 35 arbeitet nach dem sogenannten Kontaktmasterverfahren und weist einen Laser 37 und einen Modulator 38 auf. Der vom Laser 37 ausgesandte Laserstrahl 39 passiert den Modulator 38 und trifft auf der Oberfläche des Trägers 2 auf, um dort in dem mit der Substanz 25 versehenen Bereich ein Volumenhologramm durch Belichten zu erzeugen. Die Belichtungseinrichtung 35 erzeugt außerdem den in Figur 7 nicht dargestellten Referenzstrahl, welcher mit dem modulierten Laserstrahl 39 im belichtbaren Volumenbereich des Trägers 2 interferiert und so dies Bragg'schen Netzebenen und damit das Volumenhologramm erzeugt. Ein derartiges Kontaktmasterverfahren zur Erzeugung eines Volumenhologramms wird auch in der Druckschrift DE 198 09 503 A1 angewendet. Bei der Anwendung dieses Verfahrens ist es notwendig, dass der belichtbare Volumenbereich für modulierten Laserstrahl und Referenz-Laserstrahl transparent ist. Ebenso können andere Belichtungsverfahren angewendet werden, welche beispielsweise in "Ullmann's Encyclopedia of Industrial Chemistry", Kapitel "Operating Principles of Holography", Online-Veröffentlichung 15. Juni 2000, beschrieben werden.

Das Volumenhologramm kann alternativ mit anderen bekannten Verfahren zur Herstellung von Volumenhologrammen, zum Beispiel dem Kontaktmasterverfahren, erzeugt werden, auf die hier nicht weiter eingegangen werden soll.

Prinzipiell lassen sich bei der Erzeugung des Volumenhologramms fixe und individuelle Informationsbestandteile kombinieren.

In einem weiteren Ausführungsbeispiel kann die Reihenfolge von Prägeeinrichtung 27 und Belichtungseinrichtung 35 im Verfahren vertauscht werden.

Anschließend passiert der Träger 2 eine Vernetzungseinrichtung 41, in der mittels UV-Bestrahlung 42 die belichtete Schicht vernetzt und das Volumenhologramm, ggf. das Prägehologramm und das chemische Wasserzeichen, das durch die veränderte Transparenz des Trägers 2 mittels der Substanz 25 erzeugt wurde, fixiert. Alternativ kann ein Fixierofen vorgesehen sein, in dem die Vernetzung des belichteten Volumenbereichs und die Fixierung des belichteten Volumenbereichs mittels Wärmeeintrag erfolgt.

In einem weiteren Ausführungsbeispiel können der Präge- und Belichtungsschritt direkt hintereinander ausgeführt werden, so dass das Relief vor der Belichtung nicht fixiert wird. Zur Fixierung des Reliefs und Vernetzung des Volumenhologramms wird in diesem Ausführungsbeispiel nach der Beendigung des Prägeschritts und des Belichtungsschritts eine Wärmebehandlung und/oder UV-Trocknung, vorzugsweise in einem einzigen Schritt, durchgeführt (Dual-Cure-Verfahren).

Als letzten Station des Herstellungsverfahrens ist eine Vereinzelungseinrichtung 45 vorgesehen, in der der von der Rolle 20 abgewickelte Träger 2 zu einzelnen Sicherheitselementen bzw. mit Sicherheitselementen versehenen Wertdokumenten beispielsweise durch Zerschneiden vereinzelt wird. Alternativ kann in der letzten Station auch der Träger 2 wieder auf eine Rolle aufgewickelt werden. Anschließend erfolgt die Weiterverarbeitung oder Fertigstellung der erfindungsgemäßen Sicherheitselemente oder Wertdokumente.

In einem besonderen Ausführungsbeispiel können die in dem Volumenhologramm oder dem Oberflächenrelief des belichtbaren Volumenbereichs oder die in dem chemischen Wasserzeichen enthaltenen Informationen zumindest teilweise maschinenlesbar ausgeführt sein, um eine automatische Überprüfung dieser Informationen zu ermöglichen. In einer vorzugsweisen Ausführungsform sind diese maschinenlesbaren Merkmale so ausgestaltet, dass sie mit bloßem Auge nicht gesehen werden können. Dies kann beispielsweise durch eine Realisierung des Volumenhologramms im infraroten Wellenlängenbereich erreicht werden. Hierdurch wird der Nachahmungsschutz weiter erhöht.

Eine weitere signifikante Erhöhung der Sicherheit lässt sich durch die Verwendung mehrerer Wellenlängen bei der Erstellung des Volumenhologramms erreichen. Hierdurch kann die Menge der im Volumenhologramm gespeicherten Informationen erhöht werden.

Prinzipiell lässt sich das Volumenhologramm mit Prägehologramm und/oder chemischem Wasserzeichen beliebig kombinieren. Auch die Art der von Volumenhologramm, Prägehologramm und chemischem Wasserzeichen verkörperte Art der Information ist beliebig gestaltbar.

## Patentansprüche

1. Wertdokument mit einem Träger und einem Sicherheitselement, wobei der Träger Zellulose und/oder Baumwolle enthält und vorzugsweise als Papierträger ausgebildet ist, wobei das Sicherheitselement ein Volumenhologramm umfasst, das durch Belichtung eines belichtbaren Volumenbereichs des Trägers erzeugt ist, **gekennzeichnet durch** eine auf den Träger aufgebrachte Substanz, welche mindestens teilweise in den Träger eingedrungen ist, und **durch** den mit der Substanz durchdrungenen Volumenbereich des Trägers der belichtbare Volumenbereich ausgebildet wird.

2. Wertdokument nach Anspruch 1, **dadurch gekennzeichnet, dass** die Substanz auf den Träger aufgedruckt ist.

3. Wertdokument nach einem der Ansprüche 1 oder 2, **dadurch gekennzeichnet, dass** der belichtbare Volumenbereich zumindest für einen bestimmten Wellenlängenbereich der elektromagnetischen Strahlung zumindest teilweise transparent ausgebildet ist.

4. Wertdokument nach einem der vorhergehenden Anspruche, **dadurch gekennzeichnet, dass** der belichtbare Volumenbereich auf der Oberfläche ein Relief aufweist.

5. Wertdokument nach Anspruch 4, **dadurch gekennzeichnet, dass** das Relief geprägt ist.

6. Wertdokument nach einem der Ansprüche 4 oder 5, **dadurch gekennzeichnet, dass** das Relief als diffraktives Element oder als Hologramm, ausgebildet ist.

7. Wertdokument nach einem der vorhergehenden Anspruche, **dadurch gekennzeichnet, dass** die auf den Träger aufgebrachte Substanz sich zumindest aus einer Harz-/Binder-Grundkomponente, einer Komponente aus flüssigen und festen, ethylenisch (mehfach-) ungesättigten Monomeren, einem Lösungsmittel und einem Katalysator/Initiator zusammensetzt.

8. Verfahren zur Herstellung eines Sicherheitselements für ein Wertdokument mit einem Träger der Zellulose und/oder Baumwolle enthält und vorzugsweise als Papierträger ausgebildet ist, wobei das Sicherheitselement ein Volumenhologramm umfasst, das durch Belichtung eines bellchtbaren Volumenbereichs des Trägers erzeugt wird, **dadurch gekennzeichnet, dass** vor der Belichtung eine Substanz auf den Träger aufgebracht wird, welche mindestens teilweise in den Träger eindringt, wobei durch die Substanz und durch den mit der Substanz durchdrungenen Volumenbereich der belichtbare Volumenbereich ausgebildet wird.

9. Verfahren nach Anspruch 8, **dadurch gekennzeichnet, dass** die Substanz auf den Träger gedruckt wird.

10. Verfahren nach Anspruch 9, **dadurch gekennzeichnet, dass** das Aufdrucken mittels des Ink-Jet-Verfahrens erfolgt.

11. Verfahren nach einem der Anspruche 8 bis 10, **dadurch gekennzeichnet, dass** der belichtete Volumenbereich nach der Belichtung mittels elektromagnetischer Strahlung und/oder mittels Wärmezufuhr vernetzt wird.

12. Verfahren nach einem der Ansprüche 8 bis 11, **dadurch gekennzeichnet, dass** vor dem Belichten und nach dem Aufbringen der Substanz ein Relief in die Oberfläche des belichtbaren Volumenbereichs eingeprägt wird.

13. Verfahren nach Anspruch 12, **dadurch gekennzeichnet, dass** das Einprägen des Reliefs unter Zufuhr von Wärme erfolgt.

14. Verfahren nach Anspruch 12, **dadurch gekennzeichnet, dass** das Relief nach dem Prägeschritt mittels elektromagnetischer Strahlung und/oder mittels Wärmezufuhr fixiert wird.

15. Verfahren nach einem der Ansprüche 12 bis 14, **dadurch gekennzeichnet, dass** nach dem Aufbringen der Substanz und vor dem Prägevorgang eine IR-Trocknung erfolgt.

## Claims

1. A valuable document comprising a carrier and a security element, the carrier containing cellulose and/or cotton and preferably being designed as a paper carrier, the security element comprising a volume hologram which is produced by illuminating a volume area of the carrier which can be illuminated, **characterised by** a substance applied to the carrier, which substance penetrates into the carrier at least in part, the volume area which can be illuminated being formed by the volume area, which is penetrated by the substance, of the carrier.

2. The valuable document according to claim 1, **characterised in that** the substance is printed onto the carrier.

3. The valuable document according to either claim 1 or claim 2, **characterised in that** the volume area which can be illuminated is formed so as to be transparent, at least in part, at least for a specific wavelength range of electromagnetic radiation.

4. The valuable document according to any one of the preceding claims, **characterised in that** the volume area which can be illuminated comprises a relief on the surface.

5. The valuable according to claim 4, **characterised in that** the relief is stamped.

6. The valuable document according to either claim 4 or claim 5, **characterised in that** the relief is formed as a diffractive element or as a hologram.

7. The valuable document according to any one of the preceding claims, **characterised in that** the substance applied to the carrier is composed at least of a resin/binder base component, a component formed of liquid and solid ethylenically (multi-) unsaturated monomers, a solvent and a catalyst/initiator.

8. A method for producing a security element for a valuable document comprising a carrier which contains cellulose and/or cotton and is preferably designed as a paper carrier, the security element comprising a volume hologram which is produced by illuminating a volume area, which can be illuminated, of the carrier, **characterised in that** before the illumination process a substance is applied to the carrier, which substance penetrates into the carrier, at least in part, the volume area which can be illuminated being formed by the volume area which is penetrated by the substance.

9. The method according to claim 8, **characterised in that** the substance is printed onto the carrier.

10. The method according to claim 9, **characterised in that** the printing process is carried out by means of the inkjet method.

11. The method according to any one of claims 8 to 10, **characterised in that** the illuminated volume area is cross-linked, after the illumination process, by means of electromagnetic radiation and/or by means of heating.

12. The method according to any one of claims 8 to 11, **characterised in that**, before the illumination process and after the application of the substance, a relief is impressed into the surface of the volume area which can be illuminated.

13. The method according to claim 12, **characterised in that** the relief is impressed with the addition of heat.

14. The method according to claim 12, **characterised in that** the relief is fixed, after the stamping step, by means of electromagnetic radiation and/or by means of heating.

15. The method according to any one of claims 12 to 14, **characterised in that** IR drying is carried out after application of the substance and before the stamping process.

## Revendications

1. Document de valeur comportant un support et un élément de sécurité, le support contenant de la cellulose et/ou du coton et se présentant de préférence sous forme d'un support en papier, l'élément de sécurité comprenant un hologramme à volume qui est créé par exposition d'une zone de volume exposable du support, **caractérisé par** une substance appliquée sur le support et qui a pénétré du moins partiellement dans le support et dont est constituée la zone de volume exposable traversée par la substance du support.

2. Document de valeur selon la revendication 1, **caractérisé en ce que** la substance est imprimée sur le support.

3. Document de valeur selon une des revendications 1 ou 2, **caractérisé en ce que** la zone de volume exposable a une conformation transparente du moins pour une certaine plage de longueur d'onde du rayonnement électromagnétique.

4. Document de valeur selon une des revendications précédentes, **caractérisé en ce que** la zone de volume exposable présente un relief sur sa surface.

5. Document de valeur selon la revendication 4, **caractérisé en ce que** le relief est gaufré.

6. Document de valeur selon une des revendications 4 ou 5, **caractérisé en ce que** le relief est réalisé sous forme soit d'un élément diffracteur, soit d'un hologramme.

7. Document de valeur selon une des revendications précédentes, **caractérisé en ce que** la substance appliquée sur le support est composée au moins d'un composant de base en résine/liant, d'un composant en monomères liquides et solides (multi)-insaturés au niveau éthylénique, d'un solvant et d'un catalyseur/initiateur.

8. Procédé de préparation d'un élément de sécurité pour document de valeur comportant un support contenant de la cellulose et/ou du coton et se présentant de préférence sous forme d'un support en papier, l'élément de sécurité comprenant un hologramme à volume qui est créé par exposition d'une zone de volume exposable du support, **caractérisé en ce que**, avant l'exposition, est appliquée sur le support une substance qui pénètre du moins partiellement dans le support, la zone de volume exposable étant constituée par la substance et par la zone de volume traversée par la substance.

9. Procédé selon la revendication 8, **caractérisé en ce que** la substance est imprimée sur le support.

10. Procédé selon la revendication 9, **caractérisé en ce que** l'impression a lieu au moyen du procédé de jet d'encre.

11. Procédé selon une des revendications 8 à 10, **caractérisé en ce que** la zone de volume exposée est réticulée après l'exposition au moyen d'un rayonnement électromagnétique et/ou d'un apport thermique.

12. Procédé selon une des revendications 8 à 11, **caractérisé en ce qu'**un relief est gaufré dans la surface de la zone de volume exposable avant l'exposition et après application de la substance.

13. Procédé selon la revendication 12, **caractérisé en ce que** le gaufrage du relief a lieu sous apport de chaleur.

14. Procédé selon la revendication 12, **caractérisé en ce que** le relief est fixé après l'étape de gaufrage au moyen d'un rayonnement électromagnétique et/ou d'un apport thermique.

15. Procédé selon une des revendications 12 à 14, **caractérisé en ce qu'**un séchage aux IR a lieu après l'application de la substance et avant l'opération de gaufrage.
